# EUROPEAN PATENT APPLICATION

(11) **EP 1 722 259 A1**
(43) Date of publication of application: **15.11.2006**
(21) Application number: 05709537.4
(22) Date of filing: 01.02.2005
(51) Int. Cl.: G02B 7/36, H04N 5/232

(54) **AUTOFOCUS CONTROLLING APPARATUS AND METHOD, RECORDING MEDIUM, AND PROGRAM**

(30) Priority: 02.03.2004 JP 2004057298
(71) Applicant: SONY CORPORATION, Tokyo 141-0001 (JP)
(72) Inventor: OKAZAKI, Sakae, c/o Sony Corporation, Shinagawa-ku, Tokyo 1410001 (JP); NAKAMURA, Makibi, c/o Sony Corporation, Shinagawa-ku, Tokyo 1410001 (JP)
(74) Representative: Jackson, Jonathan Andrew
(86) International application number: PCT/JP2005/001391
(87) International publication number: WO 2005/085927

(57) **Abstract**

The present invention allows for increasing an autofocus-response characteristic. An image-pickup sensor makes exposures ex 11 and ex12 (Fig. 7C) in synchronization with a video-vertical-synchronization signal VP1 (Fig. 7A). A camera-signal processing unit reads video signals obtained through the exposures ex11 and ex12 at timings VR12 and VR 21, respectively (Fig. 7D). An AF-detection unit captures a high-frequency component of a video signal corresponding to an AF-detection-reduction gate frame (hereinafter simply referred to as a gate frame) at the timing of the gate frame, rectifies and detects the high-frequency component, and generates a focus-evaluation value immediately after the gate-frame timing. An AF module captures a plurality of the focus-evaluation values at the timing of an AF module AF 2 (Fig. 7F), generates an autofocus-control signal LD3 which brings a focus position near to a focusing position (Fig. 7G), and moves a focus lens on the basis of the autofocus-control signal LD3. The present invention can be used for a video camera.

## Description

### Technical Field

The present invention relates to an autofocus-control device and an autofocus-control method, a recording medium, and a program, and particularly relates to an autofocus-control device and an autofocus-control method, a recording medium, and a program that can increase an autofocus-response characteristic by performing high-speed exposure and high-speed wobbling-focusing driving.

### Background Art

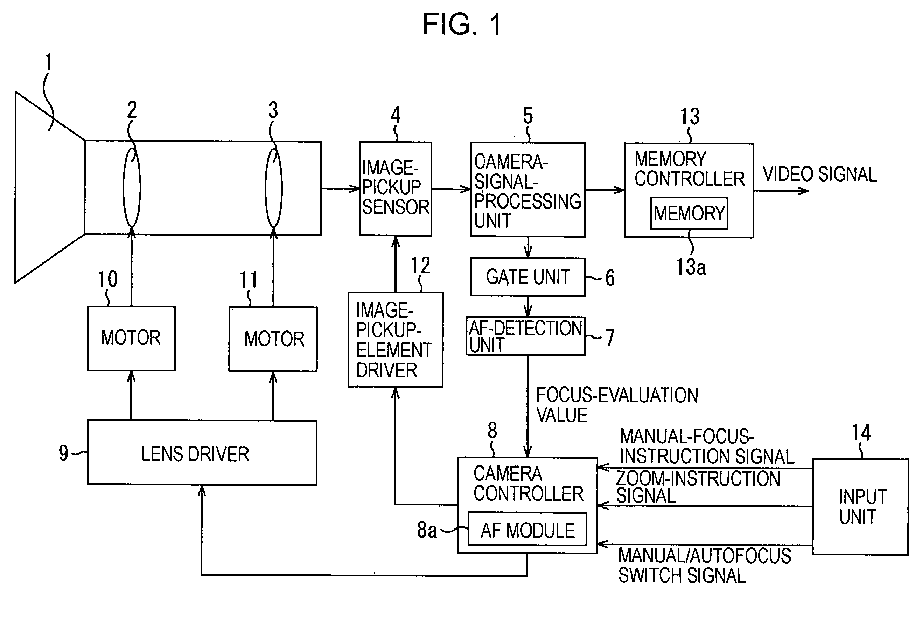

Fig. 1 is a block diagram showing an example configuration of a known video camera.

A lens block 1 including a zoom lens 2 and a focus lens 3 makes light (that is, an image of a subject) incident upon an image-pickup sensor 4. The image-pickup sensor 4 includes photoelectric-conversion elements arranged in a two-dimensional manner, where the photoelectric-conversion elements include a CCD (Charge Coupled Devices) imager and/or a C-MOS (Complementary Metal Oxide Semiconductor) imager and perform photoelectric conversion. A primary-color filter (not shown) is mounted on the front face of the image-pickup sensor 4, where the primary-color filter includes R, G, and B that are arranged in a mosaic form. That is to say, the image-pickup element 4 generates an image-pickup signal (an electrical charge) by performing photoelectric conversion for the subject's optical image which is made incident via the lens block 1 and the primary-color filter, and outputs the generated image-pickup signal to a camera-signal processing unit 5 according to the raster-scan method.

The camera-signal processing unit 5 performs sampling processing, YC-separation processing, and so forth for the image-pickup signal transmitted from the image-pickup sensor 4, outputs a brightness signal Y to a gate unit 6, and outputs the brightness signal Y and a color signal C (a color-difference signal, a primary-color signal, and so forth) to a memory controller 13.

The gate unit 6 extracts only the signal corresponding to a focusing-detection area provided in an image screen that had been prepared from among transmitted video signals and outputs the extracted signal to an AF (autofocus) detection unit 7. The AF-detection unit 7 captures a high-frequency component of the input video signal corresponding to the focusing-detection area, generates a focus-evaluation value necessary to achieve an autofocus by rectifying and detecting the high-frequency component, and outputs the focus-evaluation value to an AF module 8a of a camera controller 8.

The camera controller 8 controls driving of a lens driver 9 and an image-pickup-element driver 12 on the basis of a manual-focus-instruction signal, a zoom-instruction signal, a manual/autofocus-switch signal that are transmitted from an input unit 14. Further, the AF module 8a of the camera controller 8 controls the lens driver 9 so that the lens driver 9 performs autofocus driving on the basis of two focus-evaluation values obtained from video signals generated through exposures made at different focus-lens positions.

The lens driver 9 controls driving of a motor 10 which drives the zoom lens 2 and that of a motor 11 which drives the focus lens 3 under the control of the camera controller 8. The motors 10 and 11 control driving of the zoom lens 2 and/or the focus lens 3 under the control of the lens driver 9, respectively. The image-pickup-element driver 12 controls the image-pickup sensor 4, so as to make the image-pickup sensor 4 generate the image-pickup signal by performing photoelectric conversion for the subject's optical image which is made incident via the lens block 1 and the primary-color filter (not shown), and controls driving of an electronic shutter (not shown).

The memory controller 13 temporarily stores the video signals transmitted from the camera-signal-processing unit 5 in a memory 13a, reads the video signals in sequence, and outputs the video signals to a display (not shown) so that the video signals are displayed, as video. Otherwise, the memory controller 13 outputs the video signals to a removable medium (not shown) so that the video signals are stored therein. The input unit 14 is operated by a user and transmits various instruction signals transmitted from the user to the camera controller 8.

In the known video camera, an autofocus is achieved by determining the high-frequency component of the video signal obtained by the image-pickup sensor 4 to be the focus-evaluation value and driving the focus-lens 3 so that the focus-evaluation value increases, which is the so-called hill-climbing autofocus system.

Here, the autofocus will be described in detail.

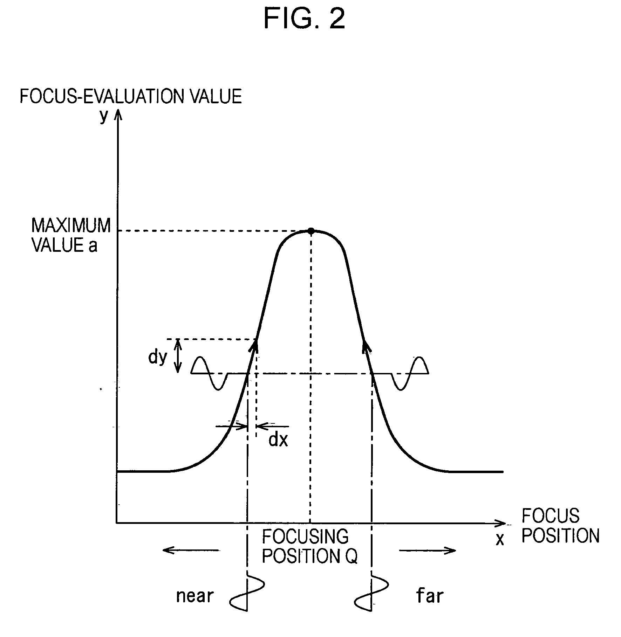

Fig. 2 shows an example change in the focus-evaluation value necessary to achieve the autofocus, the focus-evaluation value being transmitted from the AF-detection unit 7 shown in Fig. 1. In Fig. 2, the horizontal axis (x axis) represents the focus position of the focus lens 3 and the vertical axis (y axis) represents the focus-evaluation value.

When the focus position of the focus lens 3 is moved from direction far toward direction near, and/or from direction near toward direction far, the focus-evaluation value attains the maximum value a at a predetermined position, as shown in Fig. 2, which is usually referred to as "the evaluation-value hill". When the focus-evaluation value attains the maximum value a, the focus position of the focus lens 3 becomes focusing position Q of the subject.

Subsequently, the AF module 8a captures the focus-evaluation value transmitted from the AF-detection unit 7 and allows for performing "hill-climbing control" so that the focus lens 3 is moved so that the above-described evaluation value is maximized. Further, at that time, the AF module 8a slightly vibrates the focus position of the focus lens 3, so as to determine in which direction the focusing position exists on the basis of the current focus position. At that time, an evaluation value is obtained. The AF module 8a estimates a direction toward the focusing position according to whether a differential component dy/dx of the evaluation value is positive or negative. Usually, the slight vibration of the focus position is referred to as wobbling.

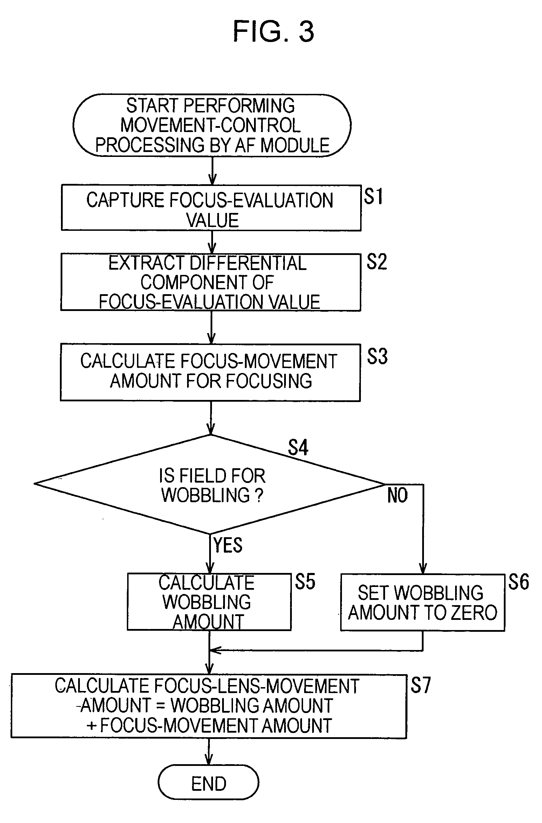

Next, movement-control processing performed by the AF module 8a for the focus lens 3 will further be described with reference to a flowchart shown in Fig. 3. Incidentally, the movement-control processing is performed over and over again at intervals of a single field.

The AF module 8a captures the focus-evaluation value from the AF-detection unit 7, at step S1, and extracts the differential component dy/dx of the focus-evaluation value and estimates the focusing-position direction, at step S2. At step S3, the AF module 8a calculates the movement amount (focus-movement amount) of the focus lens 3 on the basis of the focus-evaluation value, so as to bring the focus position near to the focusing position Q (Fig. 2), that is to say, so as to achieve focus.

At step S4, the AF module 8a determines whether or not the movement of the focus position relating to the wobbling takes place in a field. If it is determined that the movement of the focus position relating to the wobbling takes place in the field, the processing advances to step S5 so that the amount of the movement of the focus lens 3 is calculated, the movement amount being related to the wobbling (wobbling-movement amount).

At step S4, if it is determined that the movement of the focus position relating to the wobbling does not take place in the field, the processing advances to step S6 where the AF module 8a sets the wobbling amount to zero.

At step S7, after the processing corresponding to step S5 and/or step S6 is performed, the AF module 8a calculates the sum of the focus-movement amount calculated through the processing performed, at step S3, and the wobbling amount calculated through the processing performed, at step S5 and/or step S6, and determines the sum to be the movement amount of the focus lens 3. The AF module 8a controls the lens driver 9 on the basis of the calculated movement amount of the focus lens 3. The lens driver 9 moves the focus lens 3 by as much as a predetermined focus-lens movement amount via the motor 11 under the control of the AF module 8a.

Thus, the AF module 8a checks the differential component dy/dx of the focus-evaluation value obtained by wobbling the focus lens 3 and moves the focus lens 3 so that the focus position is brought near to the focusing position, thereby achieving an autofocus.

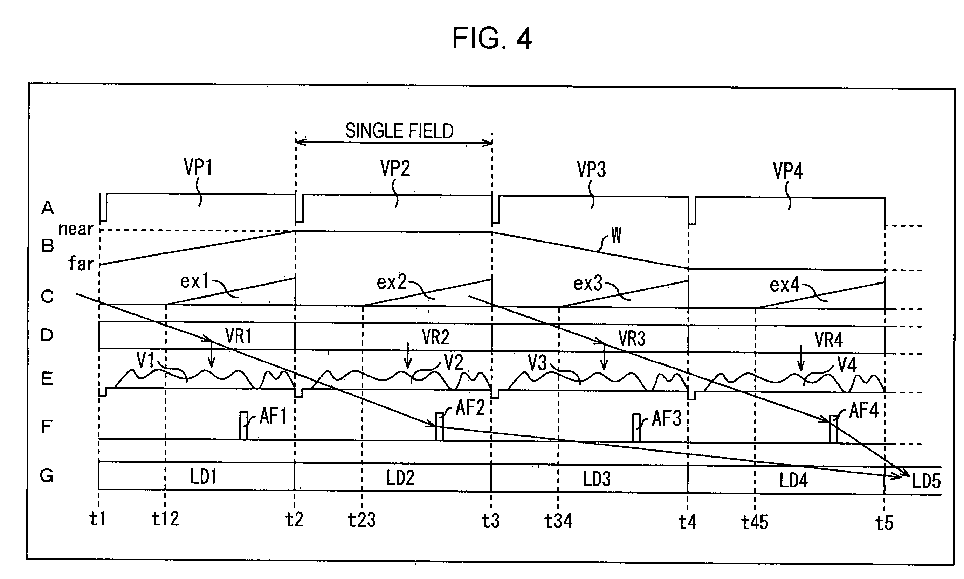

Next, operations of the video camera shown in Fig. 1 will be described with reference to a timing chart shown in Fig. 4. This example illustrates operations performed when the image-pickup sensor 4 makes a single exposure per a single field and wobbling driving is performed at intervals of four fields.

The camera controller 8 outputs video-vertical-synchronization signals VP1 to VP4 to an image-pickup-element driver 12 over a time period from time t1 to time t2, a time period from time t2 to time t3, a time period from time t3 to time t4, and a time period from time t4 to time t5, respectively (Fig. 4A). Each of the time periods of the video-vertical-synchronization signals represents the time period corresponding to a single field.

The focus position of the focus lens 3 is controlled in fields. Focus position W set by wobbling is controlled so that the focus position W moves in direction far and direction near alternately every other field at intervals of the stop period corresponding to a single field (Fig. 4B).

The image-pickup-element driver 12 controls the image-pickup sensor 4 in synchronization with the input video-vertical-synchronization signals VP1 to VP4 so that the image-pickup sensor 4 makes exposures ex1 to ex4 over a time period from time t12 to time t2, a time period from time t23 to time t3, a time period from time t34 to time t4, and a time period from time t45 to time t5 (Fig. 4C).

The camera-signal processing unit 5 reads a video signal obtained through exposure ex1 at timing VR2 that falls in between time t2 and time t3 (Fig. 4D). Similarly, the camera-signal processing unit 5 reads video signals obtained through exposures ex2 to ex4 at timings VR3 to VR5 (timing VR5 is not shown), respectively. Subsequently, the camera-signal processing unit 5 obtains video signals V1 to V4 read at the timings (Fig. 4E). The video signals V1 to V4 read by the camera-signal processing unit are output to the gate unit 6.

In the gate unit 6, though not shown, of the video signals transmitted from the camera-signal-processing unit 5, only the video signal corresponding to an AF-detection gate frame which is a focusing-detection area provided in a screen image that had been set is extracted and output to the AF-detection unit 7.

The AF-detection unit 7 captures a high-frequency component of the input video signal V1 at timing where only the video signal corresponding to the AF-detection-gate frame is extracted (hereinafter referred to as the AF-detection-gate-frame timing), rectifies and detects the high-frequency component, and generates a focus-evaluation value necessary to achieve an autofocus immediately after the AF-detection-gate-frame timing. Similarly, the AF-detection unit 7 captures, rectifies, and detects the high-frequency components of the input video signals V2 to V4 at the AF-detection-gate-frame timing, respectively, and generates a focus-evaluation value necessary to achieve an autofocus immediately after the AF-detection-gate-frame timing.

The focus-evaluation value generated by the AF-detection unit 7 is output to the AF module 8a of the camera controller 8.

The AF module 8a captures the focus-evaluation value generated immediately after the AF-detection-gate-frame timing at the timing of an AF module AF2, and captures a focus-evaluation value generated by using a different video-vertical-synchronization signal at the timing of an AF module AF4 (Fig. 4F). Then, the AF module 8a makes a comparison between the two captured focus-evaluation values, generates an autofocus-control signal LD5 so that the focus position of the focus lens 3 is brought near to the focusing position, and outputs the autofocus-control signal LD5 to the lens driver 9 (Fig. 4G).

The lens driver 9 controls driving of the motor 11 on the basis of the input autofocus-control signals LD1 to LD5 and moves the focus lens 3 by as much as a predetermined focus-lens-movement amount. Thus, an autofocus is achieved.

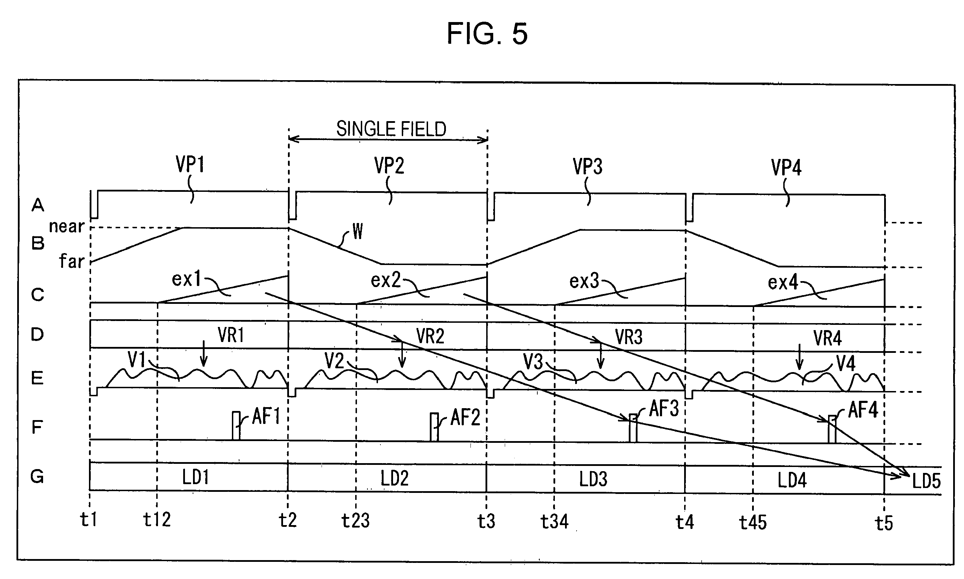

Next, other example operations of the video camera shown in Fig. 1 will be described with reference to a timing chart shown in Fig. 5. This example illustrates operations performed when the image-pickup sensor 4 makes a single exposure per a single field and wobbling driving is performed at intervals of two fields.

The camera controller 8 outputs the video-vertical-synchronization signals VP1 to VP4 to the image-pickup-element driver 12 over the time period from time t1 to time t2, the time period from time t2 to time t3, the time period from time t3 to time t4, and the time period from time t4 to time t5, respectively (Fig. 5A). Each of the time periods of the video-vertical-synchronization signals represents the time period corresponding to a single field.

The focus position of the focus lens 3 is controlled in fields. Focus position W set by wobbling is controlled so that the focus position W moves in direction far and direction near alternately every other one-second of a field at intervals of the stop period corresponding to one-second of a field (Fig. 5B).

The image-pickup element driver 12 controls the image-pickup sensor 4 in synchronization with the input video-vertical-synchronization signals VP1 to VP4 so that the image-pickup sensor 4 makes exposures ex1 to ex4 over a time period from time t12 to time t2, a time period from time t23 to time t3, a time period from time t34 to time t4, and a time period from time t45 to time t5, respectively (Fig. 5C).

The camera-signal processing unit 5 reads the video signal obtained through exposure ex1 at timing VR2 that falls in between time t2 and time t3 (Fig. 5D). Similarly, the camera-signal processing unit 5 reads video signals obtained through exposures ex2 to ex4 at timings VR3 to VR5 (timing VR5 is not shown), respectively. Subsequently, the camera-signal-processing unit 5 obtains the video signals V1 to V4 reads at the timings (Fig. 5E). The video signals V1 to V4 read by the camera-signal processing unit 5 are output to the gate unit 6.

Here, in the gate unit 6, though not shown, of the video signals transmitted from the camera-signal-processing unit 5, only the video signal corresponding to the AF-detection gate frame which is the focusing-detection area provided in the screen image that had been set is extracted and output to the AF-detection unit 7.

The AF-detection unit 7 captures a high-frequency component of the input video signal V1 at the AF-detection-gate-frame timing, rectifies and detects the high-frequency component, and generates a focus-evaluation value necessary to achieve an autofocus immediately after the AF-detection-gate-frame timing. Similarly, the AF-detection unit 7 captures the high-frequency components of the input video signals V2 to V4 at the AF-detection-gate-frame timing, respectively, rectifies and detects the high-frequency components, and generates a focus-evaluation value necessary to achieve an autofocus immediately after the AF-detection-gate-frame timing.

The focus-evaluation value generated by the AF-detection unit 7 is output to the AF module 8a of the camera controller 8.

The AF module 8a captures the focus-evaluation value generated immediately after the AF-detection-gate-frame timing at the timing of an AF module AF3, and captures a focus-evaluation value generated by using a different video-vertical-synchronization signal at the timing of the AF module AF4 (Fig. 5F). Then, the AF module 8a makes a comparison between the two captured focus-evaluation values, generates the autofocus-control signal LD5 so that the focus position of the focus lens 3 is brought near to the focusing position, and outputs the autofocus-control signal LD5 to the lens driver 9 (Fig. 5G).

The lens driver 9 controls driving of the motor 11 on the basis of the input autofocus-control signals LD1 to LD5 and moves the focus lens 3 by as much as a predetermined focus-lens-movement amount. Thus, an autofocus is achieved.

As has been described, the known video camera captures a high-frequency component of a video signal obtained through the image-pickup sensor 4, rectifies and detects the high-frequency component, so as to generate a focus-evaluation value necessary to achieve an autofocus, and drives the focus lens 3 so that the evaluation value is increased. Further, the known video camera changes the distance between the focus lens 3 and the image-pickup sensor 4 by performing slight-wobbling-focusing driving to the extent that the slight-wobbling-focusing driving is not conspicuous on a picked-up image, and obtains information about the hill-climbing control (e.g., information used for determining the hill-climbing direction) on the basis of a slight change in the focus-evaluation value.

Incidentally, in recent days, various technologies relating to autofocuses have been proposed. For example, there have been proposed technologies which allow for reducing power consumption by reducing the focus-lens moving time (e.g., refer to Patent Document 1).

[Patent Document 1] Japanese Unexamined Patent Application Publication No. 10-239579

### Disclosure of Invention

### Problems to be Solved by the Invention

As has been described, a single focus-evaluation value is generated every time a single video-vertical-synchronization signal is output. Therefore, for performing the hill-climbing control on the basis of a slight change in the focus-evaluation value, there is a need to perform slight-wobbling driving for a video signal between vertical signals with different lens positions, and change the distance between the focus lens 3 and the image-pickup sensor 4. Subsequently, there is a need to perform slight-wobbling-focusing driving at a cycle that is two times (Fig. 4) and/or four times (Fig. 5) that of the video-vertical-synchronization signal, whereby slight changes in an image become conspicuous due to an amplitude caused by the wobbling driving.

Further, since the slight changes in the image are conspicuous, the amplitude of the wobbling driving cannot be increased, which makes it difficult to obtain information about the hill-climbing control with stability.

Further, there is a need to decrease the rate of an image-height change caused by the change in the distance between the focus lens 3 and the image-pickup sensor 4, the change being made by performing the slight-wobbling-focusing driving. Therefore, it is difficult to design and manufacture the lens.

Accordingly, the present invention allows for making a slight change in an image inconspicuous and increasing the autofocus capability.

### Means for Solving the Problems

An autofocus-control device according to the present invention includes image-pickup means which picks up an image of a subject in a cycle that is (1/interger N) times a cycle of an image-vertical-synchronization signal in synchronization with the cycle of the image-vertical-synchronization signal, calculation means which calculates a focus-evaluation value for performing an autofocus on the basis of a signal of the image picked up by the image-pickup means, and change means which changes a distance between a focus lens and an image-pickup sensor on the basis of a plurality of the focus-evaluation values calculated by the calculation means. The change means changes the distance so that integer-A times of the cycle of the image-vertical-synchronization signal and integer-B times of a wobbling cycle are synchronized with each other when integer A and integer B satisfy 2 x B > A.

The calculation means can calculate the focus-evaluation value on the basis of a high-frequency component of a brightness signal of the image-pickup signal.

Merge means which merges a plurality of the signals of a plurality of the images picked up by the image-pickup means can further be provided.

Selection means which selects any one of a plurality of the signals of a plurality of the images picked up by the image-pickup means can further be provided.

An autofocus-control method according to the present invention includes an image-pickup step of picking up an image of a subject in a cycle that is (1/interger N) times a cycle of an image-vertical-synchronization signal in synchronization with the cycle of the image-vertical-synchronization signal, a calculation step of calculating a focus-evaluation value for performing an autofocus on the basis of a signal of the image picked up through processing performed at the image-pickup step, and a change step of changing a distance between a focus lens and an image-pickup sensor on the basis of a plurality of the focus-evaluation values calculated through processing performed at the calculation step. The distance is changed, at the change step, so that integer-A times of the cycle of the image-vertical-synchronization signal and integer-B times of a wobbling cycle are synchronized with each other when integer A and integer B satisfy 2 x B > A.

A program recorded on a recording medium according to the present invention makes a computer perform processing including an image-pickup step of picking up an image of a subject in a cycle that is (1/interger N) times a cycle of an image-vertical-synchronization signal in synchronization with the cycle of the image-vertical-synchronization signal, a calculation step of calculating a focus-evaluation value for performing an autofocus on the basis of a signal of the image picked up through processing performed at the image-pickup step, and a change step of changing a distance between a focus lens and an image-pickup sensor on the basis of a plurality of the focus-evaluation values calculated through processing performed at the calculation step. The distance is changed, at the change step, so that integer-A times of the cycle of the image-vertical-synchronization signal and integer-B times of a wobbling cycle are synchronized with each other when integer A and integer B satisfy 2 x B > A.

A program according to the present invention makes a computer perform processing including an image-pickup step of picking up an image of a subject in a cycle that is (1/interger N) times a cycle of an image-vertical-synchronization signal in synchronization with the cycle of the image-vertical-synchronization signal, a calculation step of calculating a focus-evaluation value for performing an autofocus on the basis of a signal of the image picked up through processing performed at the image-pickup step, and a change step of changing a distance between a focus lens and an image-pickup sensor on the basis of a plurality of the focus-evaluation values calculated through processing performed at the calculation step. The distance is changed, at the change step, so that integer-A times of the cycle of the image-vertical-synchronization signal and integer-B times of a wobbling cycle are synchronized with each other when integer A and integer B satisfy 2 x B > A.

According to the present invention, an image of a subject is picked up in a cycle that is (1/interger N) times a cycle of an image-vertical-synchronization signal in synchronization with the cycle of the image-vertical-synchronization signal, a focus-evaluation value for performing an autofocus is calculated on the basis of a signal of the picked-up image, and a distance between a focus lens and an image-pickup sensor is changed on the basis of a plurality of the calculated focus-evaluation values. At that time, the distance is changed so that integer-A times of the cycle of the image-vertical-synchronization signal and integer-B times of a wobbling cycle are synchronized with each other when integer A and integer B satisfy 2 x B > A. Advantages

The present invention allows for achieving an autofocus, and particularly allows for making a slight change in an image inconspicuous and increasing an autofocus capability.

### Brief Description of the Drawings

[Fig. 1] Fig. 1 is a block diagram showing an example configuration of a known video camera.
[Fig. 2] Fig. 2 shows an example change in a focus-evaluation value necessary to achieve an autofocus.
[Fig. 3] Fig. 3 is a flowchart illustrating movement-control processing performed for a focus lens.
[Fig. 4] Fig. 4 is a timing chart illustrating operations of the video camera shown in Fig. 1.
[Fig. 5] Fig. 5 is a timing chart illustrating other example operations of the video camera shown in Fig. 1.
[Fig. 6] Fig. 6 is a block diagram showing an example configuration of a video camera according to the present invention.
[Fig. 7] Fig. 7 is a timing chart illustrating operations of the video camera shown in Fig. 6.
[Fig. 8] Fig. 8 is a timing chart illustrating other example operations of the video camera shown in Fig. 6.
[Fig. 9] Fig. 9 is a block diagram showing an example configuration of a personal computer. Reference Numerals

1 lens block, 2 zoom lens, 3 focus lens, 4 image-pickup sensor, 5 camera-signal processing unit, 6 gate unit, 7 AF-detection unit, 8 camera controller, 9 lens driver, 10, 11 motor, 12 image-pickup-element driver, 14 input unit, 13 memory controller, 21 high-speed exposure-and-high-speed wobbling AF module, 22 merge/selection memory controller

### Best Mode for Carrying Out the Invention

Hereinafter, embodiments of the present invention will be described with reference to drawings.

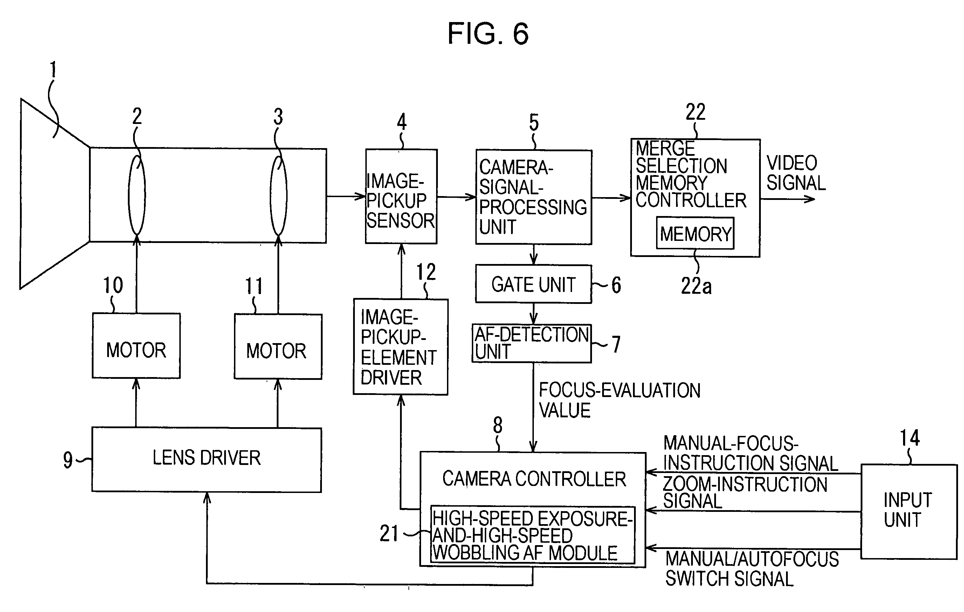

Fig. 6 is a block diagram showing an example configuration of a video camera according to the present invention. Here, the parts corresponding to those of a known video camera are designated by the same reference numerals and the descriptions thereof are omitted, as appropriate.

An AF-detection unit 7 captures high-frequency components of a plurality of video signals obtained by making high-speed exposures at different focus-lens positions, generates a focus-evaluation value necessary to achieve an autofocus by rectifying and detecting the high-frequency components, and outputs the focus-evaluation value to a high-speed exposure-and-high-speed wobbling AF module 21 (hereinafter simply referred to as an AF module 21) of a camera controller 8.

The AF module 21 of the camera controller 8 controls a lens driver 9 on the basis of the focus-evaluation value generated from the plurality of video signals obtained through the high-speed exposures made at the different focus-lens positions so that the lens driver 9 performs autofocus driving.

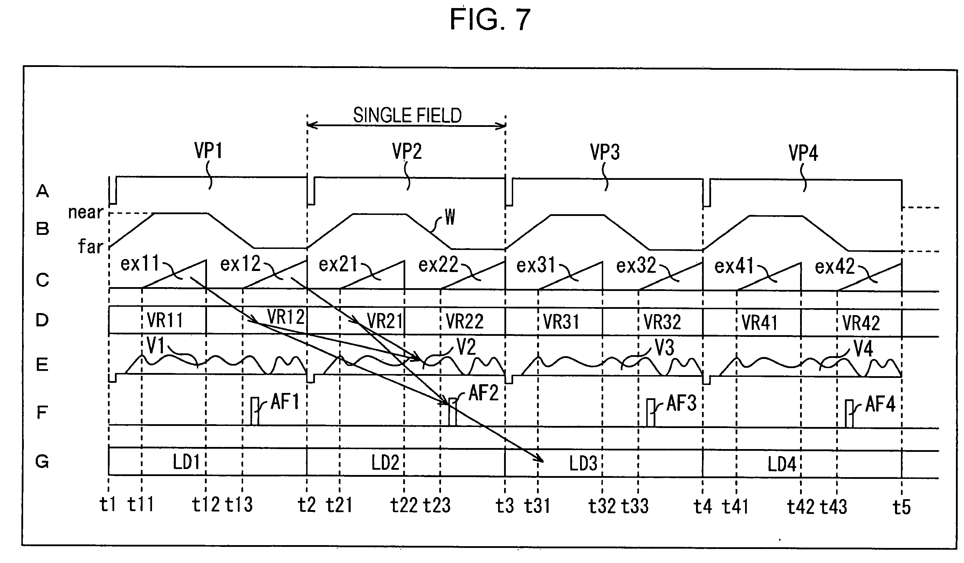

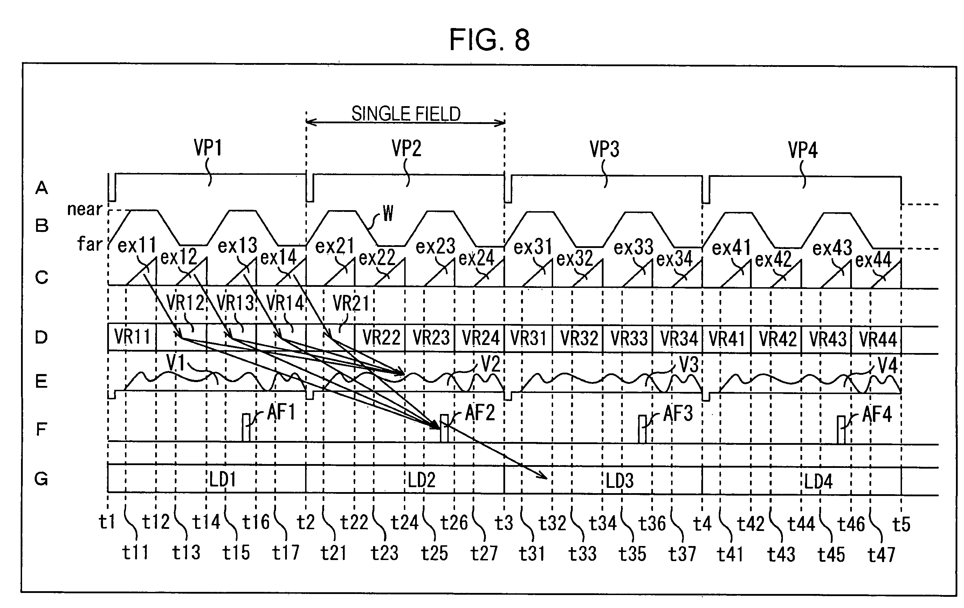

More specifically, the AF module 21 controls the- lens driver 9 so that the lens driver 9 performs high-speed wobbling focusing driving for focus position W of a focus lens 3 in direction far and direction near alternately every other single-field period. Further, every time a single video-vertical-synchronization signal is output (for every single field), the AF module 21 controls an image-pickup-element driver 12 so that an image-pickup sensor 4 makes a high-speed exposure with at least one image pickup. As will be described later with reference to timing charts shown in Figs. 7 and 8, two or four high-speed exposures are made for every single field, for example. The present invention can be achieved without being limited to the above-described example.

The merge/selection memory controller 22 temporarily stores the video signals in a memory 22a, where the video signals are obtained through a plurality of exposures made per every single field and transmitted from the camera-signal processing unit 5. Further, the merge/selection memory controller 22 reads the video signals in sequence, merges the video signals into the video signals corresponding to a single field, as required, and outputs the video signals to a display and makes the display show the video signals, as video. Otherwise, the merge/selection memory controller 22 outputs the video signals to a removable medium so that the removable medium stores the video signals. Further, the merge/selection memory controller 22 not only merges the video signals obtained through the plurality of exposures into the video signals corresponding to the single field, but also selects a predetermined video signal (for example, a video signal obtained through the first exposure made in the field).

Next, operations of the video camera shown in Fig. 6 will be described with reference to the timing chart shown in Fig. 7. In that example, operations performed when the image-pickup sensor 4 makes two exposures per a single field and when wobbling driving is performed at intervals of a single field.

The camera controller 8 outputs video-vertical-synchronization signals VP1 to VP4 to an image-pickup-element driver 12 over a time period from time t1 to time t2, a time period from time t2 to time t3, a time period from time t3 to time t4, and a time period from time t4 to time t5, respectively (Fig. 7A). Each of the time periods of the video-vertical-synchronization signals represents the single-field period.

The focus position of the focus lens 3 is controlled in fields. Focus position W set by wobbling is controlled so that the focus position W moves in direction far and direction near alternately every other one-fourth of a field at intervals of the stop period corresponding to one-fourth of a field (Fig. 7B).

The image-pickup element driver 12 controls the image-pickup sensor 4 in synchronization with the input video-vertical-synchronization signal VP1 so that the image-pickup sensor 4 performs exposure ex11 and exposure ex12 over a time period from time t11 and time t12, and a time period from time t13 to time t2, respectively (Fig. 7C).

Similarly, the image-pickup driver 12 controls the image-pickup sensor 4 in synchronization with the input video-vertical-synchronization signals VP2 to VP4 so that the image-pickup sensor 4 makes exposures ex21 and ex22 over a time period from time t21 to time t22, and a time period from time t23 to time t3, respectively, exposures ex31 and ex32 over a time period from time t31 to time t32 and a time period from time t33 to time t4, respectively, and exposures ex41 and ex42 over a time period from time t41 to time t42, and a time period from time t43 to time t5, respectively.

The camera-signal processing unit 5 reads a video signal obtained through exposure ex11 at timing VR12 that falls in between time t12 and time t2, and reads a video signal obtained through exposure ex12 at timing VR21 that falls in between time t2 and time t22 (Fig. 7D). Similarly, the camera-signal processing unit 5 reads video signals obtained through exposures ex21 and ex22 at timings VR22 and VR31, respectively, reads video signals obtained through exposures ex31 and ex32 at timings VR32 and VR41, respectively, and reads video signals obtained through exposures ex41 and ex42 at timings VR42 and VR51 (timing VR51 is not shown), respectively. The video signals read by the camera-signal processing unit 5 are temporarily stored in the memory 22a of the merge/selection-memory controller 22.

The merge/selection memory controller 22 merges the two video signals that are read by the camera-signal-processing unit 5 and that are temporarily stored in the memory 22a into the video signal corresponding to a single field, and/or selects one of the two video signals, thereby obtaining video signals V1 to V4 (Fig. 7E). For example, the merge/selection memory controller 22 obtains a video signal V2 by merging the video signal read at timing VR12 with the video signal read at timing VR21, or selecting one of the video signals.

The video signal read by the camera-signal-processing unit 5 is also output to a gate unit 6. In the gate unit 6, though not shown, of the video signals transmitted from the camera-signal-processing unit 5, only the video signal corresponding to an AF-detection gate frame which is a focusing-detection area of a screen image that had been set is extracted and output to the AF-detection unit 7.

The AF-detection unit 7 captures a high-frequency component of each of the video signals read at timings VR 12 and VR21 at timing of the AF-detection-gate frame, rectifies and detects the high-frequency components, and generates a focus-evaluation value necessary to achieve an autofocus immediately after the AF-detection-gate-frame timing. Similarly, the AF-detection unit 7 captures a high-frequency components of the video signals read at timings VR 22, VR31, VR32, VR41, and VR42, respectively, at the AF-detection-gate-frame timing, rectifies and detects the high-frequency components, and_generates a focus-evaluation value necessary to achieve an autofocus immediately after the AF-detection-gate-frame timing.

The focus-evaluation value generated by the AF-detection unit 7 is output to an AF module 21 of the camera controller 8.

The AF module 21 captures the two focus-evaluation values generated at different focus-lens positions at the timing of an AF module AF2 (Fig. 7F). Then, the AF module 21 generates an autofocus-control signal LD3 on the basis of the two captured focus-evaluation values so that the focus position of the focus lens 3 is brought near to the focusing position and outputs the autofocus-control signal LD3 to the lens driver 9 (Fig. 7G).

The lens driver 9 controls driving of a motor 11 on the basis of input autofocus-control signals LD1 to LD4 and moves the focus lens 3 by as much as a predetermined focuslend movement amount. Thus, an autofocus is achieved.

Next, other example operations of the video camera shown in Fig. 6 will be described with reference to a timing chart shown in Fig. 8. This example illustrates operations performed when the image-pickup sensor 4 makes four exposures per a single field and wobbling driving is performed at intervals of one-second of a field.

The camera controller 8 outputs the video-vertical-synchronization signals VP1 to VP4 to the image-pickup-element driver 12 over the time period from time t1 to time t2, the time period from time t2 to time t3, the time period from time t3 to time t4, and the time period from time t4 to time t5, respectively (Fig. 8A). Each of the time periods of the video-vertical-synchronization signals represents the single-field period.

The focus position of the focus lens 3 is controlled in fields. Focus position W set by wobbling is controlled so that the focus position W moves in direction far and direction near alternately every other one-eighth of a field at intervals of the stop period corresponding to one-eighth of a field (Fig. 8B).

The image-pickup element driver 12 controls the image-pickup sensor 4 in synchronization with the input video-vertical-synchronization signal VP1 so that the image-pickup sensor 4 makes exposures ex11 to ex14 over the time period from time t11 to time t12, a time period from time t13 to time t14, a time period from time t15 to time t16, and a time period from time t17 to time t2, respectively (Fig. 8C).

Similarly, the image-pickup driver 12 controls the image-pickup sensor 4 in synchronization with the input video-vertical-synchronization signals VP2 to VP4- so that the image-pickup sensor 4 makes exposures ex21 to ex24 over the time period from time t21 to time t22, a time period from time t23 to time t24, a time period from time t25 to time t26, and a time period from time t27 to time t3, respectively, exposures ex31 to ex34 over a time period from time t31 to time t32, a time period from time t33 to time t34, a time period from time t35 to time t36, and a time period from time t37 to time t4, respectively, and exposures ex41 to ex44 over a time period from time t41 to time t42, a time period from time t43 to time t44, a time period from time t45 to time t46, and a time period from time t47 to time t5, respectively.

The camera-signal processing unit 5 reads the video signal obtained through exposure ex11 at timing VR12 that falls in between time t12 and time t14, reads the video signal obtained through exposure ex12 at timing VR13 that falls in between time t14 and time t16, reads the video signal obtained through exposure ex13 at timing VR14 that falls in between time t16 and time t2, and reads the video signal obtained through exposure ex14 at timing VR21 that falls in between time t2 and time t22 (Fig. 8D). Similarly, the camera-signal processing unit 5 reads video signals obtained through exposures ex21 to ex24 at timings VR22 to VR24, and VR31, respectively, reads video signals obtained through exposures ex31 to ex34 at timings VR32 to VR34, and VR41, respectively, and reads video signals obtained through exposures ex41 to ex44 at timings VR42 to VR44, and VR51 (timing VR 51 is not shown), respectively. The video signals read by the camera-signal processing unit 5 are temporarily stored in the memory 22a of the merge/selection-memory controller 22.

The merge/selection memory controller 22 merges the four video signals that are read by the camera-signal-processing unit 5 and that are temporarily stored in the memory 22a into the video signal corresponding to a single field, merges several predetermined video signals (e.g., video signals obtained through the first and second exposures of the field) into the video signal corresponding to a single field, or selects any one of the video signals (e.g., the video signal obtained through the first exposure of the field), so as to obtain the video signals V1 to V4 (Fig. 8E).

For example, the merge/selection memory controller 22 obtains the video signal V2 by merging the four video signals read at timings VR12 to VR14 and VR21, or any two video signals (e.g., the video signals read at timings VR12 and VR13, respectively). Of course, without being limited to the above-described configuration, the merge/selection memory controller 22 may merge any three video signals (e.g., the video signals read at timings VR12 to VR14, respectively), or select any one of the four video signals read at timings VR12 to VR14 and VR21, respectively.

The video signal read by the camera-signal-processing unit 5 is also output to the gate unit 6. In the gate unit 6, though not shown, of the video signals transmitted from the camera-signal-processing unit 5, only the video signal corresponding to the AF-detection gate frame which is the focusing-detection area of the screen image that had been set is extracted and output to the AF-detection unit 7.

The AF-detection unit 7 captures a high-frequency component of each of the video signals read at timings VR 12 to VR14 and VR21 at the timing of the AF-detection-gate frame, rectifies and detects the high-frequency components, and generates a focus-evaluation value necessary to achieve an autofocus immediately after the AF-detection-gate-frame timing. Similarly, the AF-detection unit 7 captures a high-frequency component of each of the video signals read at timings VR 22 to VR24, VR31 to VR34, and VR41 to VR44 at the AF-detection-gate-frame timing, rectifies and detects the high-frequency components, and generates a focus-evaluation value necessary to achieve an autofocus immediately after the AF-detection-gate-frame timing.

The focus-evaluation value generated by the AF-detection unit 7 is output to the AF module 21 of the camera controller 8.

The AF module 21 captures the four focus-evaluation values generated at different focus-lens positions at the timing of the AF module AF2 (Fig. 8F). Then, the AF module 21 generates the autofocus-control signal LD3 on the basis of the four captured focus-evaluation values so that the focus position of the focus lens 3 is brought near to the focusing position and outputs the autofocus-control signal LD3 to the lens driver 9 (Fig. 8G).

The lens driver 9 controls driving of the motor 11 on the basis of the input autofocus-control signals LD1 to LD4 and moves the focus lens 3 by as much as a predetermined focus lens movement amount. Thus, an autofocus is achieved.

In the above-described configuration, two or four focus-evaluation values are calculated for a single video-vertical-synchronization signal, and/or slight-wobbling-focusing driving is performed over one or two times for a single video-vertical-synchronization signal. However, the present invention can be achieved without being limited to the above-described configuration. For example, when the relationship between integer A and integer B satisfies 2 x B > A, the focus-evaluation value is calculated over integer N time(s) for a single video-vertical-synchronization signal, and the slight-wobbling-focusing driving is performed over integer B times for the video-vertical-synchronization signal obtained over integer A times. More specifically, three focus-evaluation values can be calculated for a single video-vertical-synchronization signal and the slight-wobbling-focusing driving can be performed over three times for four video-vertical-synchronization signals.

As has been described, it becomes possible to make a slight change that occurs in an image due to a wobbling amplitude inconspicuous by making a high-speed exposure and performing high-speed wobbling-focusing driving in the video signal corresponding to a single field. Subsequently, it becomes possible to increase the amplitude of wobbling driving. Therefore, information about the hill-climbing control can be obtained with ease and stability, and the autofocus capability can be increased.

Further, since it becomes also possible to increase the lens-image-height change rate, the versatility of lens design can be increased and the manufacturing standard can be relaxed.

Further, since the wobbling cycle is reduced, the focus-evaluation value can be generated at earlier timing and the autofocus-response characteristic can be increased.

Further, since the focus-evaluation value is generated on the basis of a plurality of video signals obtained through the high-speed exposure, there is no need to perform comparison between focus-evaluation values used for achieving an autofocus, which also increases the autofocus-response characteristic.

Although the video camera has been described, as an example, the present invention can also be used for a digital-still camera, as a matter of course.

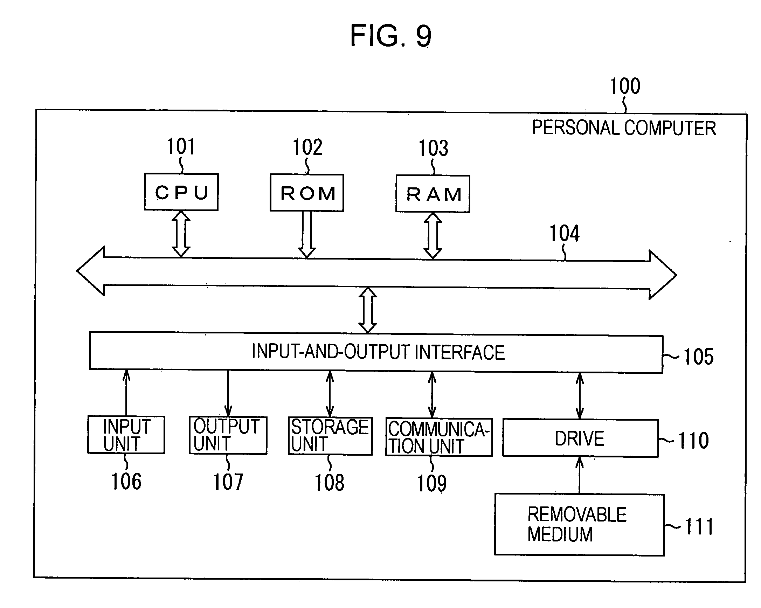

The above-described series of processing procedures can be executed by hardware and/or software. In that case, a video camera includes a computer shown in Fig. 9, for example.

In Fig. 9, a CPU (Central Processing Unit) 101 executes various processing procedures according to a program stored in a ROM (Read Only Memory) 102 and/or a program loaded from a storage unit 108 to a RAM (Random Access Memory) 103. The RAM 103 also stores data required by the CPU 101, as appropriate, so as to perform various processing procedures.

The CPU 101, the ROM 102, and the RAM 103 are connected to one another via a bus 104. An input-and-output interface 105 is also connected to the bus 104.

An input unit 106 including a keyboard, a mouse, and so forth, a display including a CRT (Cathode Ray Tube), an LCD (Liquid Crystal display), and so forth, and an output unit 107 including a speaker or the like, a storage unit 108 including a hard disk or the like, and a communication unit 109 including a modem or the like are connected to the input-and-output interface 105. The communication unit 109 performs communication processing via a network including the Internet.

Further, a drive 110 is connected to the input-and-output interface 105, as required, and a removable medium 111 including a magnetic disk, an optical disk, a magneto-optical disk, a semiconductor memory, and so forth is mounted on the input-and-output interface 105, as appropriate. Computer programs read therefrom are installed on the storage unit 108, as required.

For making software perform the above-described processing procedures, a program constituting the software is installed from the network and/or a recording medium.

The recording medium includes not only the removable medium 111 which is distributed independently of the main body of a system, so as to deliver a program to a user, as shown in Fig. 9, but also a ROM 102, a hard disk included in the storage unit 108, and so forth, where the ROM 102 and the hard disk had already been installed in the system and where the ROM 102 and the hard disk store the program delivered to the user. The removable medium 11 includes a magnetic disk storing the program (including a floppy disk (Registered Trademark)), an optical disk (including a CD-ROM (Compact Disk-Read Only Memory) and a DVD (Digital Versatile Disk)), a magneto-optical disk (including an MD (Mini-Disk) (Registered Trademark)), and/or a semiconductor memory or the like.

Further, in this specification, steps describing the program recorded in the recording medium include not only processing executed in time sequence according to the written order but also processing that is not necessarily executed in time sequence but can be executed in parallel and/or separately.

## Claims

1. An autofocus-control device including a focus lens and an image-pickup sensor, the autofocus-control device comprising:
image-pickup means which picks up an image of a subject in a cycle that is (1/interger N) times a cycle of an image-vertical-synchronization signal in synchronization with the cycle of the image-vertical-synchronization signal,
calculation means which calculates a focus-evaluation value for performing an autofocus on the basis of a signal of the image picked up by the image-pickup means, and
change means which changes a distance between the focus lens and the image-pickup sensor on the basis of a plurality of the focus-evaluation values calculated by the calculation means,
wherein the change means changes the distance so that integer-A times of the cycle of the image-vertical-synchronization signal and integer-B times of a wobbling cycle are synchronized with each other when integer A and integer B satisfy 2 x B > A.

2. An autofocus-control device according to Claim 1, wherein the calculation means calculates the focus-evaluation value on the basis of a high-frequency component of a brightness signal of the image-pickup signal.

3. An autofocus-control device according to Claim 1, further comprising merge means which merges a plurality of the signals of a plurality of the images picked up by the image-pickup means.

4. An autofocus-control device according to Claim 1, further comprising selection means which selects any one of a plurality of the signals of a plurality of the images picked up by the image-pickup means.

5. An autofocus-control method used for an autofocus-control device including a focus lens and an image-pickup sensor, the autofocus-control method comprising:
an image-pickup step of picking up an image of a subject in a cycle that is (1/interger N) times a cycle of an image-vertical-synchronization signal in synchronization with the cycle of the image-vertical-synchronization signal,
a calculation step of calculating a focus-evaluation value for performing an autofocus on the basis of a signal of the image picked up through processing performed at the image-pickup step, and
a change step of changing a distance between the focus lens and the image-pickup sensor on the basis of a plurality of the focus-evaluation values calculated through processing performed at the calculation step,
wherein the distance is changed, at the change step, so that integer-A times of the cycle of the image-vertical-synchronization signal and integer-B times of a wobbling cycle are synchronized with each other when integer A and integer B satisfy 2 x B > A.

6. A recording medium storing a computer-readable program used by an autofocus-control device including a focus lens and an image-pickup sensor, so as to perform autofocus-control processing, the program comprising:
an image-pickup step of picking up an image of a subject in a cycle that is (1/interger N) times a cycle of an image-vertical-synchronization signal in synchronization with the cycle of the image-vertical-synchronization signal,
a calculation step of calculating a focus-evaluation value for performing an autofocus on the basis of a signal of the image picked up through processing performed at the image-pickup step, and
a change step of changing a distance between the focus lens and the image-pickup sensor on the basis of a plurality of the focus-evaluation values calculated through processing performed at the calculation step,
wherein the distance is changed, at the change step, so that integer-A times of the cycle of the image-vertical-synchronization signal and integer-B times of a wobbling cycle are synchronized with each other when integer A and integer B satisfy 2 x B > A.

7. A program which makes a computer perform autofocus-control processing of an autofocus-control device including a focus lens and an image-pickup sensor, the program comprising:
an image-pickup step of picking up an image of a subject in a cycle that is (1/interger N) times a cycle of an image-vertical-synchronization signal in synchronization with the cycle of the image-vertical-synchronization signal,
a calculation step of calculating a focus-evaluation value for performing an autofocus on the basis of a signal of the image picked up through processing performed at the image-pickup step, and
a change step of changing a distance between the focus lens and the image-pickup sensor on the basis of a plurality of the focus-evaluation values calculated through processing performed at the calculation step,
wherein the distance is changed, at the change step, so that integer-A times of the cycle of the image-vertical-synchronization signal and integer-B times- of a wobbling cycle are synchronized with each other when integer A and integer B satisfy 2 x B > A.
